# EUROPEAN PATENT SPECIFICATION

(11) **EP 2 464 041 B1**
(45) Date of publication and mention of the grant of the patent: **28.11.2018**
(21) Application number: 10805965.0
(22) Date of filing: 22.04.2010
(51) Int. Cl.: H04B 17/00, H04L 12/26

(54) **DETECTION DEVICE AND METHOD THEREOF**
DETEKTIONSVORRICHTUNG UND VERFAHREN DAFÜR
DISPOSITIF DE DÉTECTION ET SON PROCÉDÉ

(30) Priority: 07.08.2009 CN 200910090832
(43) Date of publication of application: 13.06.2012
(73) Proprietor: ZTE Corporation, Shenzhen City, Guangdong 518057 (CN)
(72) Inventor: CHEN, Huarong, Shenzhen City Guangdong Province 518057 (CN)
(74) Representative: Novagraaf Technologies
(86) International application number: PCT/CN2010/072063
(87) International publication number: WO 2011/015061

(56) References cited:
- WO-A1-2009/045085
- CN-A- 101 237 360
- CN-A- 101 621 340
- CN-U- 2 069 025
- CN-U- 2 119 004
- CN-U- 2 119 004
- JP-A- 2003 304 211
- US-A- 5 671 141
- US-A1- 2007 118 714
- US-B1- 6 910 157

## Description

### Technical Field

The present invention relates to the equipment detection technology, and more particularly, to a detection device and method thereof.

### Background of the Related Art

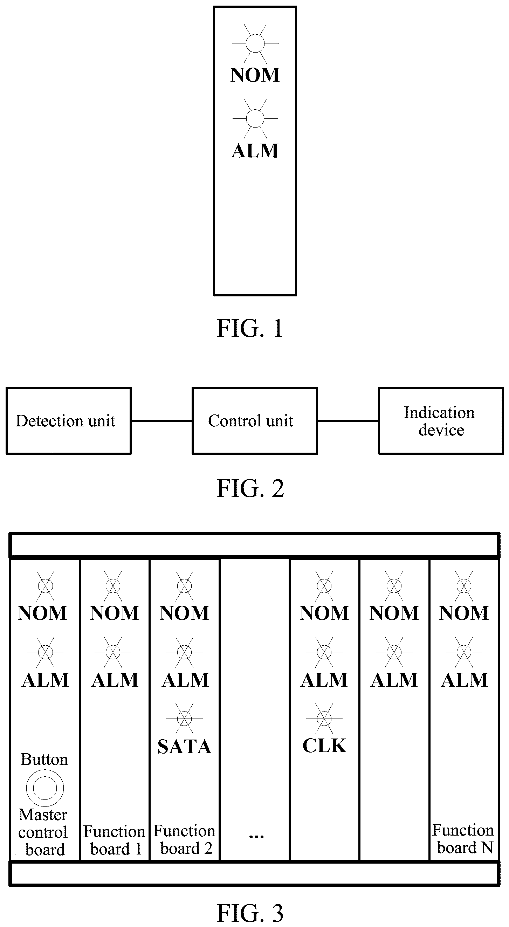

The communication equipment is usually equipped with indicator lights for equipment operation and alarm, which generally adopt a Light Emitting Diode (LED) as the light source, and the indicator light is mainly used to indicate the running states of the communication equipment and each board, and the indicator light as shown in FIG. 1 is a kind of common indication mode for running state of board. When a board runs normally, the green light NOM in the upper position of FIG. 1 flickers in a frequency of 1Hz or 0.5Hz, and the red light ALM in the lower position goes out; when there is an alarm in the board, the red light ALM in the lower position of FIG. 1 lights up to send out the alarm. Through a visual display of the LED, it is more convenient for the maintainers to observe and maintain the running state of system.

With the development of technology and demand of maintainability, the indicator light on the board is also required to provide more information indication, for example, it can judge the working state in which the board is currently located according to different flicker frequency and lighted state of each indictor light. Meanwhile, with regard to boards for implementing various kinds of functions, i.e. a function board, such as a clock board, line interface board and main/standby board and so on, indicator lights which indicate the working state of clock, connection state of line and main/standby running state of the board and so on are further provided on the board. The rich visual information about the running state of communication equipment is provided for the maintainers by the existence of these indicator lights.

However, it may have such a problem that the indicator light is off in the practical use. There are many reasons why the indicator light is off, such as the power failure of the communication equipment, the abnormal operation of board and the hardware damage of the indicator light and so on. When facing such a situation on the scene, the maintainers need to make a judgment on the failure cause very quickly and perform the maintenance promptly. As the communication equipment generally doesn't provide a scheme for detecting the failure of indicator light, it may cause that the maintainers take some detours in the process of positioning and solving the failure of communication equipment, which affects that the maintainers perform the maintenance for the system and delays the troubleshooting time.

The document US 5671141A discloses a computer program architecture for a moto vehicle on-board diagnostic system includes a plurality of monitor modules for monitoring vehicle systems or components and issuing a malfunction subroutine call to a diagnostic executive upon detecting a system or component malfunction.

### Summary of the Invention

In view of this, the main purpose of the present invention is to provide a detection device and method thereof, which implements the detection for an indication device, and then eliminates the failure of the indication device promptly.

In order to solve the foregoing technical problems, the technical scheme of the present invention is implemented as follows.

A detection device comprises:
a detection unit, configured to send a detection instruction to a control unit;
a control unit, configured to drive an indication device to send an indication according to the received detection instruction;
if the indication device on a board can be driven to send the indication, indicating that a corresponding indication device is normal; if the indication device on the board can not be driven to send the indication, indicating that the corresponding indication device is out of order.

The detection unit comprises: a button and a control bus on a system backplane;
the control unit is: a Complex Programmable Logic Device (CPLD) on each board;
wherein,
the button is configured to receive operation of maintainers, and cause the control bus on the system backplane to be in low level when the button is pressed;
the CPLD is configured to drive the indication device on the board in which the CPLD self is located to send the indication when detecting that the control bus on the system backplane is in low level.

When the button is not pressed, the control bus on the system backplane is in high level;
the CPLD is further configured to determine a current working state of the board according to a state instruction sent by CPU of the board and drive the indication device according to a display rule which is preset and corresponds to the working state when detecting that the control bus on the system backplane is in high level.

The detection unit comprises: a network management system and a CPU on a master control board;
the control unit is: the CPU and the CPLD on each board, and the board comprises at least a function board;
wherein,
the network management system is configured to send a detection instruction to the CPU on the master control board;
the CPU on the master control board is configured to forward the received detection instruction to the CPU on each function board;
the CPU on each board is configured to receive the detection instruction, and trigger the CPLD on the board in which the CPU self is located to drive the indication device to send the indication;
the CPLD on each board is configured to drive the indication device on the board in which the CPLD self is located to send the indication according to triggering.

The network management system is further configured to: send a detection cancellation instruction to the CPU on the master control board;
the CPU on the master control board is further configured to: forward the received detection cancellation instruction to the CPU on each function board;
the CPU on each board is further configured to: receive the detection cancellation instruction, and control the CPLD on the board in which the CPU self is located to drive the indication device;
the CPLD on each board is further configured to: determine a current working state of the board according to a state instruction sent by CPU of the board, and drive the indication device according to a display rule which is preset and corresponds to the working state.

A detection method, the method comprises:
a detection unit sending a detection instruction to a control unit;
a control unit driving a detection device to send an indication according to the received detection instruction;
if the indication device on a board can be driven to send the indication, indicating that a corresponding indication device is normal; if the indication device on the board can not be driven to send the indication, indicating that the corresponding indication device is out of order.

The detection unit comprises: a button and a control bus on a system backplane;
the control unit is: a CPLD on each board;
the method is specifically:
causing the control bus on the system backplane to be in low level when the button is pressed;
when detecting that the control bus on the system backplane is in low level, the CPLD driving the indication device on the board in which the CPLD self is located to send an indication.

The method further comprises:
when the button is not pressed, the control bus on the system backplane is in high level;
the CPLD determining a current working state of the board according to a state instruction sent by CPU of the board and driving the indication device according to a display rule which is preset and corresponds to the working state when detecting that the control bus on the system backplane is in high level.

The detection unit comprises: a network management system and a CPU on a master control board;
the control unit is: the CPU and the CPLD on each board, and the board comprises at least a function board;
the method is specifically:
the network management system sending a detection instruction to the CPU on the master control board, and the CPU on the master control board forwarding the received detection instruction to the CPU on each function board;
the CPU on each board receiving the detection instruction, and triggering the CPLD on the board in which the CPU self is located to drive the indication device to send the indication, and the CPLD on each board driving the indication device on the board in which the CPLD self is located to send the indication.

The method further comprises:
The network management system sending a detection cancellation instruction to the CPU on the master control board, and the CPU on the master control board forwarding the received detection cancellation instruction to the CPU on each function board;
the CPU on each board receiving the detection cancellation instruction, and controlling the CPLD on the board in which the CPU self is located to drive the indication device, the CPLD on each board determining the current working state of the board according to a state instruction sent by the CPU of the board, and driving the indication device according to a display rule which is preset and corresponds to the working state.

According to the scheme provided by the present invention, it can be very convenient to eliminate the hardware failure of indication device on the board, and make the maintainers can quickly check a failure when the communication equipment is out of order, which improves the efficiency of the failure elimination, thereby enhancing the maintainability of the system.

In the specific implementation of the scheme of the present invention, the detection for the indication device is implemented by setting one button on the communication equipment or by a network management system without changing the original communication equipment too much, that is, a simple improvement is required for implementation, which is low-cost and easily operational.

The invention is defined by the subject-matter of the independent claim. Further aspects of the invention are outlined in the dependent claims. Embodiments which do not fall within the scope of the claims do not describe part of the present invention.

### Brief Description of Drawings

FIG. 1 is a schematic diagram of a kind of common indication mode for running state of the board.
FIG. 2 is a structural schematic diagram of the detection device according to the present invention.
FIG. 3 is a schematic diagram of the location in which the button is located according to the specific example 1 of the present invention.
FIG. 4 is a structural schematic diagram of the detection device according to the specific example 1 of the present invention.
FIG. 5 is a structural schematic diagram of the detection device according to the specific example 2 of the present invention.

### Preferred Embodiments of the Present Invention

In the present invention, whether the indication device on each board is normal is detected through sending a detection instruction to a Complex Programmable Logic Device (CPLD) on each board, that is, after the CPLD receives the detection instruction, if the indication device on a board can be driven to send the indication, it indicates that the corresponding indication device is normal; if the indication device on a board can not be driven to send the indication, it indicates that the corresponding indication device is out of order.

FIG. 2 is the structural schematic diagram of the detection device according to the present invention, and as shown in FIG. 2, the device comprises: a detection unit, a control unit and an indication device, wherein, the detection unit is configured to send a detection instruction to a control unit; the control unit is configured to drive the detection device to send an indication according to the received detection instruction. When the indication device is normal, the indication is sent under the drive of the control unit, therefore, if the indication device on the board can be driven to send the indication, it indicates that the corresponding indication device is normal; if the indication device on the board can not be driven to send the indication, it indicates that the corresponding indication device is out of order. The control unit and indication device are both on the board.

The above indication device can be an indicator light performing indication through lighting, such as the LED; and it also can be a voice indication device performing indication through voice. Below the specific implementation of the present invention will be described by taking the indicator light as an example.

In the scheme of the present invention, one button can be set on the communication equipment, and the sending of the detection instruction can be implemented by pressing the button. Specifically, the control on the indicator light on the board is implemented by using the original system backplane and master control board of the communication equipment and the CPU and the CPLD on each function board through the set button. Such an implementation way doesn't need to change the original communication equipment too much but just need a simple improvement for implementation, which is low-cost and easily operational.

When the button is set on the master control board, it is as shown in FIG. 3. In the practical use, the position of the set button is not just limited to the master control board, and the button can also be set on a certain function board enabled on the communication equipment, only that the line connected with the button can connect with the control bus on the system backplane.

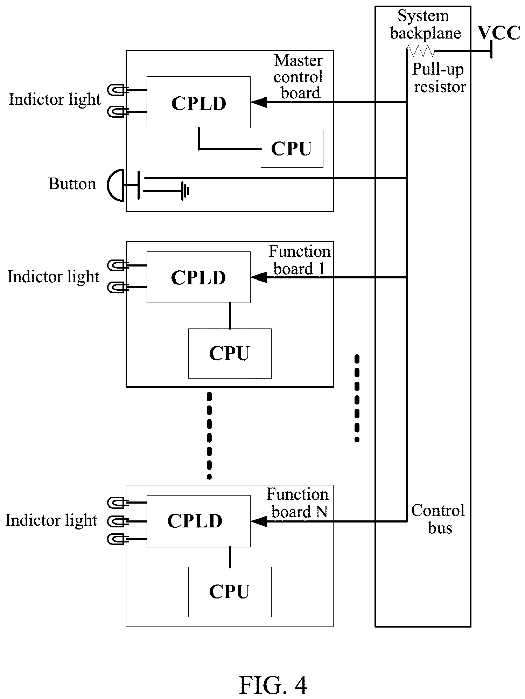

FIG. 4 is a structural schematic diagram of the detection device according to the specific example 1 of the present invention, and as shown in FIG. 4, the detection unit comprises: a button and a control bus on a system backplane, and the control unit is a CPLD on each board, wherein the button is used to receive the operation of the maintainers and cause the control bus on the system backplane to be in low level when the button is pressed; the CPLD is used to drive the indicator light on the board in which the CPLD self is located to light up when detecting that the control bus on the system backplane is in low level. Here, the button being pressed is equivalent to sending a detection instruction to the CPLD through the system backplane.

In combination with the structure in FIG. 4, the process of the specific implementation comprises:
the CPLDs of all the boards are connected to the control bus on the system backplane through control lines. As the pull-up resistor exists on the control bus on the system backplane, the control bus is in a high level state. When the CPLD on each board detects that the control bus on the system backplane is in high level through the control line, the CPLD determines the current working state of the board according to a state instruction sent by a CPU of the board, and drives the indicator light to display in a way of flicker, or normally on, or normally off and so on according to a display rule which is preset and corresponds to the working state.

When the indicator light goes out and the maintainers need to perform the maintenance, it can directly make the CPLD drive all indicator lights on each board to light up through pressing the button. When pressing the button, one end of the button is connected with the control bus on the system backplane, and the other end is grounding, which makes the control bus of the system backplane directly ground and turns into being in low level. The CPLD of board drives the indicator light on the board to light up when detecting that the control bus of the system back is in low level. If some indicator lights still go out at the moment, it indicates that the hardware of the corresponding indicator light is damaged, which needs to be replaced; if all the indicator lights light up at the moment, it indicates that indicator lights on each board are normal, and the current failure is a failure of related board, such as software failure or other reasons, which needs the further positioning for eliminating the failure. After releasing the button, the control bus of the system backplane turns into being in high level again, the CPLD continues to determine the current working state of the board according to a state instruction sent by a CPU of the board, and drives the indicator light to display in a way of flicker, or normally on, or normally off and so on according to a display rule which is preset and corresponds to the working state.

In general, the communication equipment is managed by the network management system, with regard to the devices in the upper position whose button is not convenient to be pressed, the detection function of indicator light can be added in the network management system according to the present invention. When needing to test the indicator light, the network management system sends the detection instruction to the master control board. The master control board forwards the detection instruction to all function boards after receiving the detection instruction. After the master control board and each function board receive the detection instruction, the CPLD is controlled to drive the indicator light to light up. After the network management system sends the detection cancellation instruction through the master control board, each indicator light returns to the normal state.

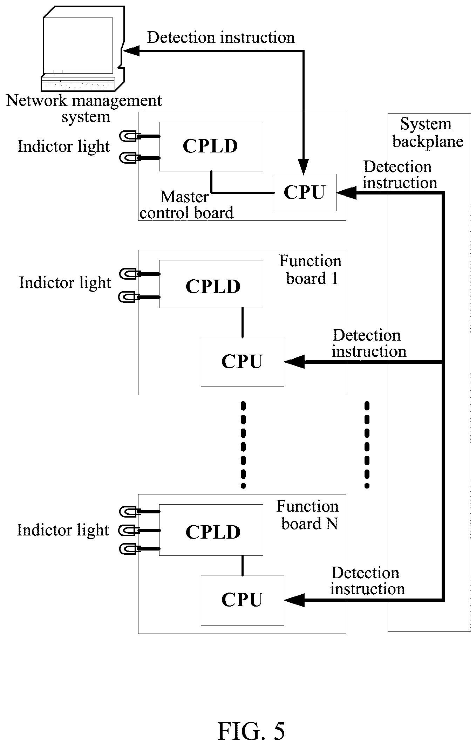

FIG. 5 is a structural schematic diagram of the detection device according to the specific example 2 of the present invention, and as shown in FIG. 5, the detection unit comprises: a network management system and a CPU on a master control board, and the control unit is the CPU and CPLD on each board, wherein the network management system is used to send a detection instruction to the CPU on the master control board; the CPU on the master control board is used to forward the received detection instruction to the CPU on each function board; the CPU on each board is used to trigger the CPLD on the board in which the CPU self is located to drive the indicator lighter to light up after receiving the detection instruction; and the CPLD is used to drive the indicator light on the board in which the CPLD self is located to light up according to the triggering. The above CPU on each board can comprise the CPU on the master control board and the CPU on each function board.

In combination with the structure in FIG. 5, the process of the specific implementation comprises:
in normal condition, the CPLD determines the current working state of the board according to a state instruction sent by a CPU of the board, and drives the indicator light to display in a way of flicker, or normally on, or normally off and so on according to a display rule which is preset and corresponds to the working state.

When needing to perform maintenance and detecting the indicator light, the maintainers send a detection instruction through a Graphical User Interface (GUI) of the network management system, and the command parameter of that detection instruction comprises all the boards. The CPU on the master control board of the communication equipment forwards the detection instruction to the CPUs on all function boards after receiving the detection instruction. The CPU on each board sends an instruction for controlling the CPLD on each board to drive the indicator light to light up after receiving the detection instruction. If some indicator lights still go out at the moment, it indicates that the hardware of the corresponding indicator light is damaged, which needs to be replaced; if all the indicator lights light up at the moment, it indicates that indicator lights on each board are normal.

After completing the maintenance, the maintainers then send a detection cancellation instruction through the GUI of the network management system, and the CPU on the master control board of the communication equipment forwards the detection cancellation instruction to the CPUs on all the function boards after receiving the detection cancellation instruction. The CPU on each board controls the CPLD to drive the indicator light to display normally after receiving the detection cancellation instruction, that is, the CPLD continues to determine the current working state of the board according to a state instruction sent by a CPU of the board, and drives the indicator light to display in a way of flicker, or normally on, or normally off and so on according to a display rule which is preset and corresponds to the working state.

The above function board refers to the function board being enabled on the communication equipment.

The above description is just the preferred examples of the present invention, which is not used to limit the protection scope of the present invention.

## Claims

1. A detection device, applied in a communication equipment, comprising:
a detection unit, configured to send a detection instruction to a control unit;
a control unit, configured to drive an indication device to send an indication according to the received detection instruction;
wherein, the control unit and indication device are on a board;
if the indication device on the board can be driven to send the indication, indicating that a corresponding indication device is normal; if the indication device on the board can not be driven to send the indication, indicating that the corresponding indication device is out of order; wherein
- the detection unit comprises a button set on the communication equipment and a control bus on a system backplane;
- the control unit is: a Complex Programmable Logic Device, CPLD, on each board;
and wherein,
- the button is configured to receive an operation of maintainers, and cause the control bus on the system backplane to be in low level when the button is pressed;
- the CPLD is configured to drive the indication device on the board in which the CPLD self is located to send the indication when detecting that the control bus on the system backplane is in low level;
- when the button is not pressed, the control bus on the system backplane is in high level;
the CPLD is further configured to determine a current working state of the board according to a state instruction sent by a CPU of the board and drive the indication device according to a display rule which is preset and corresponds to the working state when detecting that the control bus on the system backplane is in high level.

2. The device according to claim 1, wherein,
the detection unit comprises: a network management system and a CPU on a master control board;
the control unit is: a CPU and a CPLD on each board, and the board comprises at least a function board;
wherein,
the network management system is configured to send the detection instruction to the CPU on the master control board;
the CPU on the master control board is configured to forward the received detection instruction to the CPU on each function board;
the CPU on each board is configured to receive the detection instruction, and trigger the CPLD on the board in which the CPU self is located to drive the indication device to send the indication;
the CPLD on each board is configured to drive the indication device on the board in which the CPLD self is located to send the indication according to triggering.

3. The device according to claim 2, wherein,
the network management system is further configured to: send a detection cancellation instruction to the CPU on the master control board;
the CPU on the master control board is further configured to: forward the received detection cancellation instruction to the CPU on each function board;
the CPU on each board is further configured to: receive the detection cancellation instruction, and control the CPLD on the board in which the CPU self is located to drive the indication device;
the CPLD on each board is further configured to: determine a current working state of the board according to a state instruction sent by CPU of the board, and drive the indication device according to a display rule which is preset and corresponds to the working state.

4. A detection method, applied in a communication equipment, the method comprising:
a detection unit sending a detection instruction to a control unit;
a control unit driving an indication device to send an indication according to the received detection instruction;
wherein the control unit and indication device are on a board
if the indication device on the board can be driven to send the indication, indicating that a corresponding indication device is normal; if the indication device on the board can not be driven to send the indication, indicating that the corresponding indication device is out of order;
wherein the detection unit comprises a button set on the communication equipment and a control bus on a system backplane and the control unit is: a CPLD on each board;
wherein the method is specifically:
causing the control bus on the system backplane to be in low level when the button is pressed;
when detecting that the control bus on the system backplane is in low level, the CPLD driving the indication device on the board in which the CPLD self is located to send the indication;
when the button is not pressed, the control bus on the system backplane is in high level; the CPLD determining a current working state of the board according to a state instruction sent by a CPU of the board and driving the indication device according to a display rule which is preset and corresponds to the working state when detecting that the control bus on the system backplane is in high level.

5. The method according to claim 4, wherein,
the detection unit comprises: a network management system and a CPU on a master control board;
the control unit is: a CPU and a CPLD on each board, and the board comprises at least a function board;
the method is specifically:
the network management system sending the detection instruction to the CPU on the master control board, and the CPU on the master control board forwarding the received detection instruction to the CPU on each function board;
the CPU on each board receiving the detection instruction, and triggering the CPLD on the board in which the CPU self is located to drive the indication device to send the indication, and the CPLD on each board driving the indication device on the board in which the CPLD self is located to send the indication.

6. The method according to claim 5, the method further comprising:
the network management system sending a detection cancellation instruction to the CPU on the master control board, and the CPU on the master control board forwarding the received detection cancellation instruction to the CPU on each function board;
the CPU on each board receiving the detection cancellation instruction, and controlling the CPLD on the board in which the CPU self is located to drive the indication device, the CPLD on each board determining a current working state of the board according to a state instruction sent by CPU of the board, and driving the indication device according to a display rule which is preset and corresponds to the working state.

## Patentansprüche

1. Detektionsvorrichtung, die in einer Kommunikationsausrüstung angewendet wird, umfassend:
eine Detektionseinheit, die dazu konfiguriert ist, eine Detektionsanweisung an eine Steuereinheit zu senden;
eine Steuereinheit, die dazu konfiguriert ist, eine Hinweisvorrichtung so anzusteuern, dass sie einen Hinweis gemäß der empfangenen Detektionsanweisung sendet;
wobei sich die Steuereinheit und Hinweisvorrichtung auf einer Platine befinden;
wenn die Hinweisvorrichtung auf der Platine so angesteuert werden kann, dass die den Hinweis sendet, Hinweisen darauf, dass eine entsprechende Hinweisvorrichtung normal ist; wenn die Hinweisvorrichtung auf der Platine nicht so angesteuert werden kann, dass sie den Hinweis sendet, Hinweisen darauf, dass die entsprechende Hinweisvorrichtung defekt ist; wobei
- die Detektionseinheit einen Tastensatz an der Kommunikationsausrüstung und einen Steuerbus auf einer System-Backplane umfasst;
- die Steuereinheit ist: eine Complex Programmable Logic Device, CPLD, auf jeder Platine; und wobei
- die Taste dazu konfiguriert ist, eine Betätigung von Wartungspersonal zu empfangen und den Steuerbus auf der System-Backplane dazu zu bringen, sich in Low-Pegel zu befinden, wenn die Taste gedrückt ist;
- die CPLD dazu konfiguriert ist, die Hinweisvorrichtung auf der Platine, in der die CPLD selbst liegt, so anzusteuern, dass sie den Hinweis sendet, wenn erkannt wird, dass sich der Steuerbus auf der System-Backplane in Low-Pegel befindet;
- wenn die Taste nicht gedrückt ist, der Steuerbus auf der System-Backplane sich in High-Pegel befindet;
die CPLD weiter dazu konfiguriert ist, einen aktuellen Arbeitszustand der Platine gemäß einer von einer CPU der Platine gesendeten Zustandsanweisung zu bestimmen und die Hinweisvorrichtung gemäß einer Anzeigeregel anzusteuern, die voreingestellt ist und dem Arbeitszustand entspricht, wenn erkannt wird, dass sich der Steuerbus auf der System-Backplane in High-Pegel befindet.

2. Vorrichtung nach Anspruch 1, wobei
die Detektionseinheit umfasst: ein Netzmanagementsystem und eine CPU auf einer Master-Steuerplatine;
die Steuereinheit ist: eine CPU und eine CPLD auf jeder Platine, und die Platine mindestens eine Funktionsplatine umfasst;
wobei
das Netzmanagementsystem dazu konfiguriert ist, die Detektionsanweisung an die CPU auf der Master-Steuerplatine zu senden;
die CPU auf der Master-Steuerplatine dazu konfiguriert ist, die empfangene Detektionsanweisung an die CPU auf jeder Funktionsplatine weiterzuleiten;
die CPU auf jeder Platine dazu konfiguriert ist, die Detektionsanweisung zu empfangen und die CPLD auf der Platine, in der die CPU selbst liegt, so zu triggern, dass sie die Hinweisvorrichtung so ansteuert, dass dieselbe den Hinweis sendet;
die CPLD auf jeder Platine dazu konfiguriert ist, die Hinweisvorrichtung auf der Platine, in der die CPLD selbst liegt, so anzusteuern, dass sie den Hinweis gemäß der Triggerung sendet.

3. Vorrichtung nach Anspruch 2, wobei
das Netzmanagementsystem weiter dazu konfiguriert ist: eine Detektionsstornoanweisung an die CPU auf der Master-Steuerplatine zu senden;
die CPU auf der Master-Steuerplatine weiter dazu konfiguriert ist: die empfangene Detektionsstornoanweisung an die CPU auf jeder Funktionsplatine weiterzuleiten;
die CPU auf jeder Platine weiter dazu konfiguriert ist: die Detektionsstornoanweisung zu empfangen und die CPLD auf der Platine, in der die CPU selbst liegt, so zu steuern, dass sie die Hinweisvorrichtung ansteuert;
die CPLD auf jeder Platine weiter dazu konfiguriert ist: einen aktuellen Arbeitszustand der Platine gemäß einer von CPU der Platine gesendeten Zustandsanweisung zu bestimmen und die Hinweisvorrichtung gemäß einer Anzeigeregel anzusteuern, die voreingestellt ist und dem Arbeitszustand entspricht.

4. Detektionsverfahren, das in einer Kommunikationsausrüstung angewendet wird, wobei das Verfahren umfasst:
Senden, durch eine Detektionseinheit, einer Detektionsanweisung an eine Steuereinheit;
Ansteuern, durch eine Steuereinheit, einer Hinweisvorrichtung so, dass sie einen Hinweis gemäß der empfangenen Detektionsanweisung sendet;
wobei sich die Steuereinheit und Hinweisvorrichtung auf einer Platine befinden,
wenn die Hinweisvorrichtung auf der Platine so angesteuert werden kann, dass die den Hinweis sendet, Hinweisen darauf, dass eine entsprechende Hinweisvorrichtung normal ist; wenn die Hinweisvorrichtung auf der Platine nicht so angesteuert werden kann, dass sie den Hinweis sendet, Hinweisen darauf, dass die entsprechende Hinweisvorrichtung defekt ist;
wobei die Detektionseinheit einen Tastensatz an der Kommunikationsausrüstung und einen Steuerbus auf einer System-Backplane umfasst, und die Steuereinheit ist: eine CPLD auf jeder Platine;
wobei das Verfahren spezifisch ist:
Bringen des Steuerbusses auf der System-Backplane dazu, sich in Low-Pegel zu befinden, wenn die Taste gedrückt ist;
wenn detektiert wird, dass sich der Steuerbus auf der System-Backplane in Low-Pegel befindet, Ansteuern, durch die CPLD, der Hinweisvorrichtung auf der Platine, in der die CPLD selbst liegt, so, dass sie den Hinweis sendet;
wenn die Taste nicht gedrückt ist, sich der Steuerbus auf der System-Backplane in High-Pegel befindet;
Bestimmen, durch die CPLD, eines aktuellen Arbeitszustands der Platine gemäß einer von einer CPU der Platine gesendeten Zustandsanweisung, und Ansteuern der Hinweisvorrichtung gemäß einer Anzeigeregel, die voreingestellt ist und dem Arbeitszustand entspricht, wenn detektiert wird, dass sich der Steuerbus auf der System-Backplane in High-Pegel befindet.

5. Verfahren nach Anspruch 4, wobei
die Detektionseinheit umfasst: ein Netzmanagementsystem und eine CPU auf einer Master-Steuerplatine;
die Steuereinheit ist: eine CPU und eine CPLD auf jeder Platine, und die Platine mindestens eine Funktionsplatine umfasst;
das Verfahren spezifisch ist:
Senden, durch das Netzmanagementsystem, der Detektionsanweisung an die CPU auf der Master-Steuerplatine, und Weiterleiten, durch die CPU auf der Master-Steuerplatine, der empfangenen Detektionsanweisung an die CPU auf jeder Funktionsplatine;
Empfangen der Detektionsanweisung durch die CPU auf jeder Platine, und Triggern der CPLD auf der Platine, in der die CPU selbst liegt, so, dass sie die Hinweisvorrichtung so ansteuert, dass dieselbe den Hinweis sendet, und Ansteuern, durch die CPLD auf jeder Platine, der Hinweisvorrichtung auf der Platine, in der die CPLD selbst liegt, so, dass sie den Hinweis sendet.

6. Verfahren nach Anspruch 5, wobei das Verfahren weiter umfasst:
Senden, durch das Netzmanagementsystem, einer Detektionsstornoanweisung an die CPU auf der Master-Steuerplatine, und Weiterleiten, durch die CPU auf der Master-Steuerplatine, der empfangenen Detektionsstornoanweisung an die CPU auf jeder Funktionsplatine;
Empfangen der Detektionsstornoanweisung durch die CPU auf jeder Platine, und Steuern der CPLD auf der Platine, in der die CPU selbst liegt, so, dass sie die Hinweisvorrichtung ansteuert, Bestimmen, durch die CPLD auf jeder Platine, eines aktuellen Arbeitszustands der Platine gemäß einer von CPU der Platine gesendeten Zustandsanweisung, und Ansteuern der Hinweisvorrichtung gemäß einer Anzeigeregel, die voreingestellt ist und dem Arbeitszustand entspricht.

## Revendications

1. Dispositif de détection, appliqué à un équipement de communication, comprenant :
une unité de détection configurée pour envoyer une instruction de détection à une unité de commande ;
une unité de commande configurée pour piloter un dispositif d'indication pour envoyer une indication en fonction de l'instruction de détection reçue ;
dans lequel l'unité de commande et le dispositif d'indication sont sur une carte ;
si le dispositif d'indication sur la carte peut être piloté pour envoyer l'indication, l'indication qu'un dispositif d'indication correspondant est normal ; si le dispositif d'indication sur la carte ne peut pas être piloté pour envoyer l'indication, l'indication que le dispositif d'indication correspondant est hors service ; dans lequel
- l'unité de détection comprend un ensemble de bouton sur l'équipement de communication et un bus de commande sur un système de fond de panier ;
- l'unité de commande est : un dispositif logique programmable complexe, CPLD, sur chaque carte ; et dans lequel
- le bouton est configuré pour recevoir une opération d'agents d'entretien et amener le bus de commande sur le fond de panier de système à être dans un niveau bas quand le bouton est enfoncé ;
- le CPLD est configuré pour piloter le dispositif d'indication sur la carte sur laquelle le CPLD lui-même est situé pour envoyer l'indication quand il est détecté que le bus de commande sur le fond de panier de système est dans un niveau bas ;
- quand le bouton n'est pas enfoncé, le bus de commande sur le fond de panier de système est dans un niveau haut ;
le CPLD est configuré en outre pour déterminer un état de fonctionnement actuel de la carte en fonction d'une instruction d'état envoyée par une CPU de la carte et piloter le dispositif d'indication en fonction d'une règle d'affichage qui est prédéfinie et correspond à l'état de fonctionnement quand il est détecté que le bus de commande sur le fond de panier de système est dans un niveau haut.

2. Dispositif selon la revendication 1, dans lequel
l'unité de détection comprend : un système de gestion de réseau et une CPU sur une carte de commande maître ;
l'unité de commande est : une CPU et un CPLD sur chaque carte et la carte comprend au moins une carte de fonction ;
dans lequel
le système de gestion de réseau est configuré pour envoyer l'instruction de détection à la CPU sur la carte de commande maître ;
la CPU sur la carte de commande maître est configurée pour transférer l'instruction de détection reçue à la CPU sur chaque carte de fonction ;
la CPU sur chaque carte est configurée pour recevoir l'instruction de détection et déclencher le CPLD sur la carte sur laquelle la CPU elle-même est située pour piloter le dispositif d'indication pour envoyer l'indication ;
le CPLD sur chaque carte de fonction est configuré pour piloter le dispositif d'indication sur la carte sur laquelle le CPLD lui-même est situé pour envoyer l'indication en fonction du déclenchement.

3. Dispositif selon la revendication 2, dans lequel
le système de gestion de réseau est configuré en outre pour : envoyer une instruction d'annulation de détection à la CPU sur la carte de commande maître ;
la CPU sur la carte de commande maître est configurée en outre pour : transférer l'instruction d'annulation de détection reçue à la CPU sur chaque carte de fonction ;
la CPU sur chaque carte est configurée en outre pour : recevoir l'instruction d'annulation de détection et commander le CPLD sur la carte sur laquelle la CPU elle-même est située pour piloter le dispositif d'indication ;
le CPLD sur chaque carte est configuré en outre pour : déterminer un état de fonctionnement actuel de la carte en fonction d'une instruction d'état envoyée par une CPU de la carte et piloter le dispositif d'indication en fonction d'une règle d'affichage qui est prédéfinie et correspond à l'état de fonctionnement.

4. Procédé de détection, appliqué à un équipement de communication, le procédé comprenant :
l'envoi par une unité de détection d'une instruction de détection à une unité de commande ;
le pilotage par une unité de commande d'un dispositif d'indication pour envoyer une indication en fonction de l'instruction de détection reçue ;
dans lequel l'unité de commande et le dispositif d'indication sont sur une carte
si le dispositif d'indication sur la carte peut être piloté pour envoyer l'indication, l'indication qu'un dispositif d'indication correspondant est normal ; si le dispositif d'indication sur la carte ne peut pas être piloté pour envoyer l'indication, l'indication que le dispositif d'indication correspondant est hors service ;
dans lequel l'unité de détection comprend un ensemble de bouton sur l'équipement de communication et un bus de commande sur un système de fond de panier et l'unité de commande est : un CPLD sur chaque carte ;
dans lequel le procédé est spécifiquement :
le fait d'amener le bus de commande sur le fond de panier de système à être dans un niveau bas quand le bouton est enfoncé ;
quand il est détecté que le bus de commande sur le fond de panier de système est dans un niveau bas, le pilotage par le CPLD du dispositif d'indication sur la carte sur laquelle le CPLD lui-même est situé pour envoyer l'indication ;
quand le bouton n'est pas enfoncé, le bus de commande sur le fond de panier de système est dans un niveau haut ;
la détermination d'un état de fonctionnement actuel de la carte en fonction d'une instruction d'état envoyée par une CPU de la carte et le pilotage du dispositif d'indication en fonction d'une règle d'affichage qui est prédéfinie et correspond à l'état de fonctionnement quand il est détecté que le bus de commande sur le fond de panier de système est dans un niveau haut, par le CPLD.

5. Procédé selon la revendication 4, dans lequel
l'unité de détection comprend : un système de gestion de réseau et une CPU sur une carte de commande maître ;
l'unité de commande est : une CPU et un CPLD sur chaque carte et la carte comprend au moins une carte de fonction ;
le procédé est spécifiquement :
l'envoi par le système de gestion de réseau de l'instruction de détection à la CPU sur la carte de commande maître, et le transfert par la CPU sur la carte de commande maître de l'instruction de détection reçue à la CPU sur chaque carte de fonction ;
la réception sur chaque carte de l'instruction de détection et le déclenchement du CPLD sur la carte sur laquelle la CPU elle-même est située pour piloter le dispositif d'indication pour envoyer l'indication, par la CPU, et le pilotage par le CPLD sur chaque carte du dispositif d'indication sur la carte sur laquelle le CPLD lui-même est situé pour envoyer l'indication.

6. Procédé selon la revendication 5, le procédé comprenant en outre :
l'envoi par le système de gestion de réseau d'une instruction d'annulation de détection à la CPU sur la carte de commande maître et le transfert par la CPU sur la carte de commande maître de l'instruction d'annulation de détection reçue à la CPU sur chaque carte de fonction ;
la réception par la CPU sur chaque carte de l'instruction d'annulation de détection et commander le CPLD sur la carte sur laquelle la CPU elle-même est située pour piloter le dispositif d'indication, la détermination par le CPLD sur chaque carte d'un état de fonctionnement actuel de la carte en fonction d'une instruction d'état envoyée par une CPU de la carte et le pilotage du dispositif d'indication en fonction d'une règle d'affichage qui est prédéfinie et correspond à l'état de fonctionnement.
